# EUROPEAN PATENT APPLICATION

(11) **EP 4 840 710 A1**
(43) Date of publication of application: **18.11.2026**
(21) Application number: 25177111.9
(22) Date of filing: 16.05.2025
(51) Int. Cl.: B60T 17/22, B60K 35/10, B60Q 1/44, B60T 7/20, B60T 7/10, B60K 35/21

(54) **BRAKE SYSTEM FOR A VEHICLE, BRAKING AIDING METHOD, AND VEHICLE COMPRISING SUCH BRAKE SYSTEM**

(71) Applicant: VOLVO TRUCK CORPORATION, 405 08 Göteborg (SE)
(72) Inventor: DE BRITO, David, 38230 CHARVIEU CHAVAGNEUX (FR); SOUBEYRAND, Theo, 69009 LYON (FR)
(74) Representative: Lavoix

(57) **Abstract**

Brake system (100) for a motor vehicle (102), comprising at least:
- an actuator (1) for activating at least one braking function of the motor vehicle (102);
- at least one light (2) configured to emit light;
- at least one sensor (3) which detects when emergency braking (10) has been applied or is going to be applied to the motor vehicle (102); and
- a controller (4) which, upon receiving from the at least one sensor (3) a signal (S_{EB}) indicating that the emergency braking (10) has been applied or is going to be applied to the motor vehicle (102), modifies or causes modifying at least one visible characteristic of light emitted by the at least one light (2) to thereby visually highlight location of the actuator (1).

## Description

### TECHNICAL FIELD

The disclosure relates generally to motor vehicles. In particular aspects, the disclosure relates to a brake system for a motor vehicle, to a method for aiding braking actions onboard a motor vehicle, and to a motor vehicle comprising such brake system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

When a motor vehicle, such as a truck, is travelling, it is possible that emergency braking is applied. For example, automatic emergency brake (AEB) systems installed onboard of the motor vehicle may apply the brakes automatically if a driver has not responded in a timely manner to a warning alerting that an obstacle, e.g. another vehicle, is within a dangerous distance. Once emergency braking has been applied, the driver may want to apply also the trailer brake system, for instance a hand control unit. However, in the emergency situation, it might be difficult to find this hand control unit in a very short period of time.

### SUMMARY

According to a first aspect of the disclosure, there is provided a brake system for a motor vehicle, comprising at least:
- an actuator suitable for activating at least one braking function of the motor vehicle;
- at least one light configured to emit light, in particular an adjustable light;
- at least one sensor which detects when emergency braking has been applied or is going to be applied to the motor vehicle; and
- a controller which, upon receiving from the at least one sensor a signal indicating that the emergency braking has been applied or is going to be applied to the motor vehicle, modifies or causes modifying at least one visible characteristic of light emitted by the at least one light to thereby visually highlight location of the actuator. The first aspect of the disclosure may seek to provide a drive with an aid for quickly locating the actuator. A technical benefit may include giving the driver a support for timely activating a braking function once emergency braking has been applied or is going to be applied.

Optionally in some examples, including in at least one preferred example, the controller, upon receiving from the at least one sensor a signal indicating that the emergency braking has been applied or is going to be applied to the motor vehicle, switches or causes switching the at least one light from a first state to a second state visually indicative that an emergency braking has been applied or is going to be applied to the motor vehicle. A technical benefit may include giving the driver a simple and effective support for timely activating a braking function once emergency braking has been applied or is going to be applied.

Optionally in some examples, including in at least one preferred example, the controller, upon receiving from the at least one sensor a signal indicating that emergency braking has been applied or is going to be applied to the motor vehicle, modifies or causes modifying the color of light emitted by the at least one light. Optionally in some examples, including in at least one preferred example, the controller, upon receiving from the at least one sensor a signal indicating that emergency braking has been applied or is going to be applied to the motor vehicle, modifies or causes modifying causes the at least one light to emit flashing light. Optionally in some examples, including in at least one preferred example, the controller, upon receiving from the at least one sensor a signal indicating that emergency braking has been applied or is going to be applied to the motor vehicle, modifies the brightness of the light emitted by the at least one light. Optionally in some examples, including in at least one preferred example, the controller, upon receiving from the at least one sensor a signal indicating that emergency braking has been applied or is going to be applied to the motor vehicle, causes the at least one light to emit flashing light having a color different from a color of light emitted when no emergency braking has been applied or not going to be applied. A technical benefit of each of the above options may include giving the driver a simple and effective support for timely activating a braking function once emergency braking has been applied or is going to be applied, in a very flexible way that may allow exploiting any desired characteristic(s) of the light.

Optionally in some examples, including in at least one preferred example, the at least one light is a LED backlight. A technical benefit may include using a very simple and easily controllable and identifiable light.

Optionally in some examples, including in at least one preferred example, the at least one light is located at or directly on the actuator. A technical benefit may include rendering extremely easy and quick for the driver the localization of the actuator.

Optionally in some examples, including in at least one preferred example, the at least one light is located on a dashboard of the motor vehicle. A technical benefit may include rendering easily visible the localization of the actuator.

Optionally in some examples, including in at least one preferred example, the actuator comprises or is constituted by a pivoting actuation lever. A technical benefit may include rendering easier the actuation of the actuator by the driver.

Optionally in some examples, including in at least one preferred example, the lever is configured to have a range of motion extending from - 45° to +30°, preferably from -30° to +15°, with respect to a rest position. A technical benefit may include rendering more proportional the activation of the further braking function.

Optionally in some examples, including in at least one preferred example, the actuator comprises or is constituted by a pushable button. A technical benefit may include rendering easier the actuation of the actuator by the driver.

According to a second aspect of the disclosure, there is provided a motor vehicle comprising such a brake system. The second aspect of the disclosure may seek to may seek to provide a driver with an aid for quickly locating the actuator. A technical benefit may include giving the driver a simple and effective support for timely activating the further braking function once emergency braking has been applied.

Optionally in some examples, including in at least one preferred example, the motor vehicle is a truck. A technical benefit may include giving the driver a simple and effective support for timely activating the further braking function once emergency braking has been applied.

Optionally in some examples, including in at least one preferred example, the truck comprises a tractor and a trailer, and wherein the actuator, once actuated, causes applying braking to at least one of the tractor and the trailer. A technical benefit may include reducing the stop distance is reduced. Further, by braking the trailer together with the tractor, it helps the truck to stay in line and avoid the trailer running over the tractor.

According to a third aspect of the disclosure, there is provided a method for aiding braking action onboard a motor vehicle, comprising at least:
(a): detecting, via at least one sensor, when an emergency braking has been applied or is going to be applied to the motor vehicle;
(b): upon detecting that emergency braking has been applied or is going to be applied to the motor vehicle, modifying or causing modifying at least one visible characteristic of light emitted by at least one light to thereby visually highlight location of an actuator suitable for activating a further braking function of the motor vehicle. The third aspect of the disclosure may seek to provide a driver with an aid for quickly locating the actuator. A technical benefit may include giving the driver a simple and effective support for timely activating the further braking function once emergency braking has been applied.

Optionally in some examples, including in at least one preferred example, the modifying or causing modifying comprises switching or causing switching the at least one light from a first state to a second state visually indicative that an emergency braking has been applied or is going to be applied to the motor vehicle. A technical benefit may include giving the driver a simple and effective support for timely activating a braking function once emergency braking has been applied or is going to be applied.

Optionally in some examples, including in at least one preferred example, the modifying or causing modifying comprises modifying or causing modifying the color of light emitted by the at least one light. Optionally in some examples, including in at least one preferred example, the modifying or causing modifying comprises causing the at least one light to emit flashing light. Optionally in some examples, including in at least one preferred example, the modifying or causing modifying comprises modifying or causing modifying the brightness of light emitted by the at least one light. Optionally in some examples, including in at least one preferred example, the modifying or causing modifying comprises causing the at least one light to emit flashing light having a color different from a color of the light emitted when no emergency braking has been applied or not going to be applied. A technical benefit of each of the above options may include giving the driver a simple and effective support for timely activating a braking function once emergency braking has been applied or is going to be applied, in a very flexible way that may allow exploiting any desired characteristic(s) of the light.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG.** 1 is an exemplary block diagram of a brake system for a motor vehicle according to an example.
**FIG.** 2 is a view of an exemplary motor vehicle using a brake system according to the disclosure.
**FIG.** 3 is an exemplary view of the interior of a cabin of a truck using a brake system according to the disclosure.
**FIG. 4** is an enlarged view of the circled area A of FIG. 3.
**FIG. 5** is a flow diagram of a method for aiding braking actions onboard a motor vehicle.

### DETAILED DESCRIPTION

The detailed description set forth below provides information and examples of the disclosed technology with sufficient detail to enable those skilled in the art to practice the disclosure.

When a motor vehicle, such as a truck, is travelling and emergency braking is applied, a driver may want or need to apply also manually the brake system via an actuator thereof. However, in emergency situations, it might be difficult to find this actuator in a very short period of time.

The present disclosure provides a system and a method capable of helping a driver in timely localizing the position of such actuator to thereby allow activating at least one further barking function that may be potentially needed or desired to be applied to the motor vehicle.

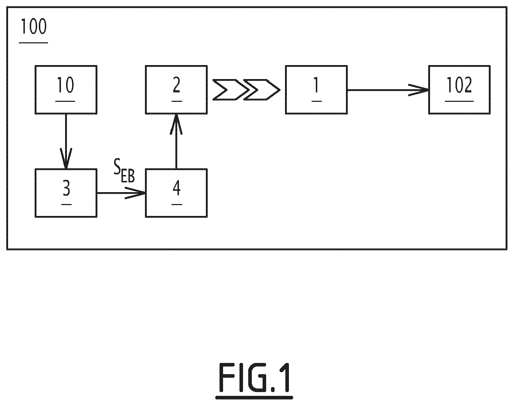

FIG. 1 is an exemplary block diagram of a brake system for a motor vehicle, therein indicated by the overall reference number 100.

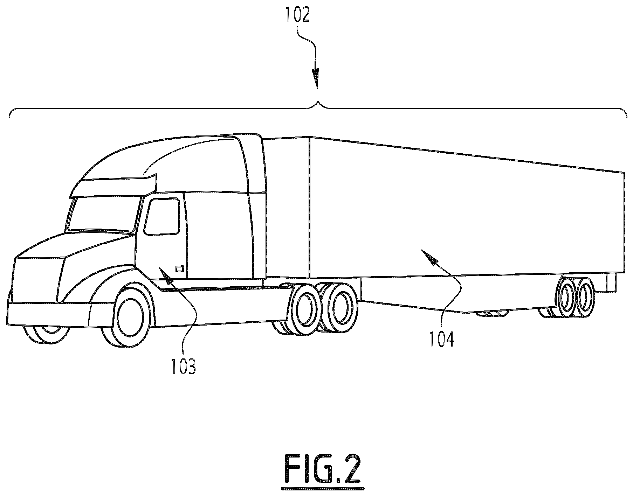

FIG. 2 shows an example of a motor vehicle indicated by the overall reference number 102.

In the example illustrated in FIG. 2, the motor vehicle 102 illustrated is a truck that comprises a tractor 103 and a trailer 104.

Clearly, the motor vehicle on which the brake system 100 according to the present disclosure can be installed can be any type of motor vehicle.

As illustrated in FIG. 1, the brake system 100 according to the present disclosure comprises:
- an actuator 1 for activating at least one braking function of the motor vehicle;
- at least one light 2 configured to emit light;
- at least one sensor 3 which detects when emergency braking 10 has been applied or is going to be applied to the motor vehicle; and
- a controller 4 which, upon receiving from the at least one sensor 3 a signal S_{EB} indicating that the emergency braking 1 has been applied or is going to be applied to the motor vehicle 100, modifies or causes modifying at least one visible characteristic of light emitted by the at least one light 2 to thereby visually highlight, for example for the driver, location of the actuator 1.

The at least one braking function of the motor vehicle may include the usual braking of the vehicle or part thereof, e.g. of the trailer 104 and a park braking function of the vehicle.

In one possible aspect, the at least one light 2 is configured to emit an adjustable light.

The term at least one sensor has to be interpreted hereby as broadly as possible, and as comprising for example any detection system or device which may be formed by one or more components, including software modules/algorithms.

For example, the at least one sensor 3 may be part of or constituted by a driver-assistance system installed onboard of the motor vehicle 102, such as an ADAS (Advanced Driver-Assistance System), configured for example to detect nearby obstacles and to alert, e.g. visually or acoustically, the driver of any potential dangerous situation, and/or to apply emergency braking when for example, the driver has not reacted timely.

The emergency braking 10 is for example applied by automatically activating the main brakes of the braking system of the motor vehicle 102 that are usually activated by the driver when pushing the brake pedal.

In one possible aspect, the controller 4, receives from the at least one sensor 3 a signal S_{EB} indicating that the emergency braking 10 has been applied or is going to be applied to the motor vehicle 102. The controller 4 switches or causes switching the at least one light 2 from a first state to a second state visually indicative that emergency braking has been applied or is going to be applied to the motor vehicle 102. Thus, in the second state, the visual indication by the light source 2 draws the attention of the driver towards the actuator 1 in case the driver may want to apply it.

In one possible aspect, the controller 4, upon receiving from the at least one sensor 3 a signal S_{EB} indicating that the emergency braking 10 has been applied or is going to be applied to the motor vehicle 102, modifies or causes modifying the color of the light emitted by the at least one light 2.

In one possible aspect, the controller 4, upon receiving from the at least one sensor 3 a signal S_{EB} indicating that emergency braking 10 has been applied or is going to be applied to the motor vehicle 10, causes the at least one light 2 to emit flashing light.

In one possible aspect, the controller 4, upon receiving from the at least one sensor 3 a signal S_{EB} indicating that emergency braking 10 has been applied or is going to be applied to the motor vehicle 100, modifies or causes modifying the brightness of the light emitted by the at least one light 2.

In one possible aspect, the controller 4, upon receiving from the at least one sensor 3 a signal S_{EB} indicating that emergency braking 10 has been applied or is going to be applied to the motor vehicle 102, causes the at least one light 2 to emit flashing light having a color different from a color of the light emitted when no emergency braking 10 has been applied or not going to be applied.

In one possible aspect, the at least one light 2 is a LED backlight.

In one possible aspect, the at least one light 2 is located at, e.g. in proximity to, or directly on the actuator 1.

In one possible aspect, the at least one light 2 is located on a dashboard of the motor vehicle 102.

In one possible aspect, the actuator 1 is configured to be actuated by a vehicle's driver for manually activating said at least one braking function of the motor vehicle 102.

In one possible aspect, the actuator 1 is configured to be actuated by a vehicle's driver for manually activating first braking of at least part of the vehicle 102, e.g. the trailer 104, and then a parking brake system of the motor vehicle 102.

In one possible aspect, the actuator 1 comprises or is constituted by a pivoting actuation lever 1.

In one possible aspect, the pivoting actuating lever is configured to have a range of motion spanning from -45° to +30° with respect to a rest position.

In one possible aspect, the pivoting actuating lever is configured to have a range of motion spanning from -30° to +15° with respect to a rest position.

In one possible aspect, the actuator 1 comprises or is constituted by a pushable button.

In one possible aspect, the brake system 100 is an electrical brake system.

In one possible aspect, the actuator 1, once actuated, causes applying braking to at least one of the tractor 103 and the trailer 104.

In one possible aspect, the actuator 1, once actuated, causes applying braking to both the tractor 103 and the trailer 104.

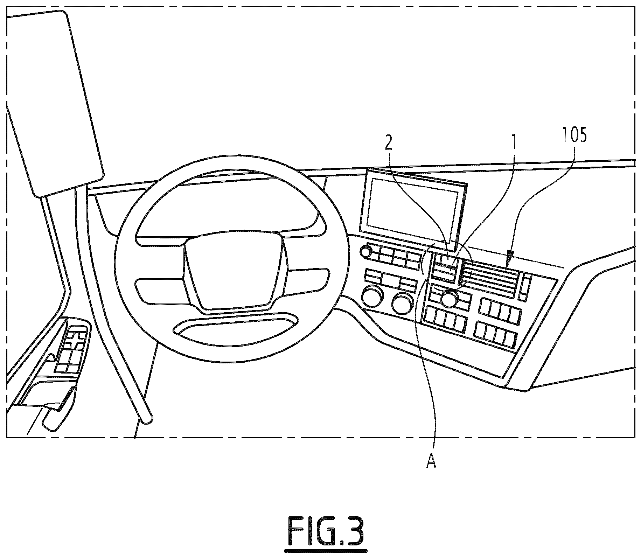

FIG. 3 illustrates the interior of a driver's cabin of an exemplary motor vehicle.

For instance, the cabin illustrated in FIG. 3 may be part of the tractor 103 of the motor vehicle 102 illustrated in FIG. 2.

In the example illustrated in FIG. 3, the dashboard is indicated by the reference number 105.

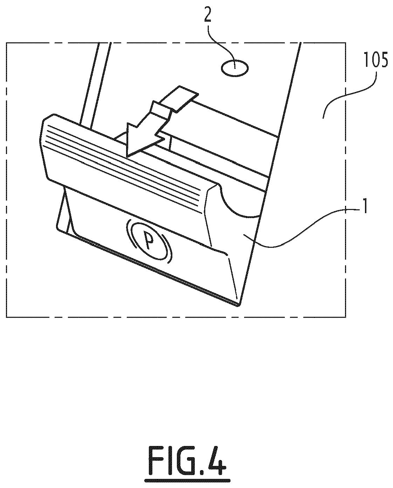

FIG. 4 is an enlarged view of the circled area A of FIG. 3, and illustrated in more details a portion of the dashboard 105 where the actuator 1 is located.

According to the example depicted in FIG. 3 and FIG. 4, the actuator 1 has the form of a pivoting actuation lever 1, that may be manually actuated for instance by the driver, and may have a range of motion spanning from -45° to+ 30°, preferably from -30° to +15°, with respect to a rest position shown in FIG. 3.

In the example illustrated in FIG. 3 and FIG. 4, the at least one light 2 is located on the dashboard 105 close to the lever 1.

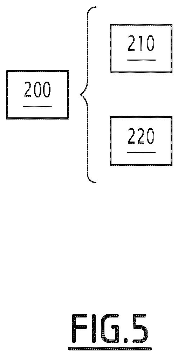

FIG. 5 is a flow diagram of a method 200 for aiding braking actions onboard a motor vehicle 102, the method comprising at least:
210: detecting, via at least one sensor 3, when an emergency braking 10 has been applied or is going to be applied to the motor vehicle 102; and
220: upon detecting that emergency braking 10 has been applied or is going to be applied to the motor vehicle 102, modifying or causing modifying, for example via a controller 4, at least one visible characteristic of light emitted by at least one light 2, which is installed onboard of the vehicle, to thereby visually highlight location of an actuator 1 suitable for activating at least one further braking function of the motor vehicle 102.

In one possible aspect, the step 220 comprises switching or causing switching the at least one light 2 from a first state to a second state visually indicative that an emergency braking 10 has been applied or is going to be applied to the motor vehicle 102.

In one possible aspect, the step 220 comprises modifying or causing modifying color of light emitted by the at least one light 2.

In one possible aspect, the step 220 comprises causing the at least one light 2 to emit flashing light.

In one possible aspect, the step 220 comprises modifying or causing modifying the brightness of light emitted by the at least one light 2.

In one possible aspect, the step 220 comprises causing the at least one light 2 to emit flashing light having a color different from a color of light emitted when no emergency braking 10 has been applied or not going to be applied.

The controller 4 can be constituted by or comprised in the electronic control unit (ECU) of the motor vehicle 102, or can be a separate electronic controller specifically devised for the functionalities of the system 100, and for instance also for carrying out the method 200, according to the present disclosure.

The controller 4 is adapted for example to execute instructions from a computer-readable medium to perform any of the functions or processing described herein. While the controller 5 is represented in FIG. 1 by a single box, it may include any collection of devices that individually or jointly execute a set (or multiple sets) of instructions to perform any of the functions or processing discussed herein. Accordingly, any reference in the disclosure and/or claims to a controller or equivalently to an electronic controller or electronic control unit (ECU), etc., includes reference to one or more such devices to individually or jointly execute a set (or multiple sets) of instructions to perform such functions or processing.

In particular, the controller 4 may comprise at least one computing device or electronic device capable of including firmware, hardware, and/or executing software instructions to implement the functionality/processing described herein. The controller 5 may include processing circuitry (e.g., processing circuitry including one or more processor devices or control units), a memory, such as the data storage. The processing circuitry may include any number of hardware components for conducting data or signal processing or for executing computer code stored in a memory. The processing circuitry may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry may further include computer executable code that controls operation of the programmable device.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The present disclosure provides at least the following examples.

**Example 1:** a brake system 100 for a motor vehicle 102, comprising at least:
- an actuator 1 for activating at least one braking function of the motor vehicle 102;
- at least one light 2 configured to emit light;
- at least one sensor 3 which detects when emergency braking 10 has been applied or is going to be applied to the motor vehicle 102; and
- a controller 4 which, upon receiving from the at least one sensor 3 a signal S_{EB} indicating that the emergency braking 10 has been applied or is going to be applied to the motor vehicle 102, modifies or causes modifying at least one visible characteristic of light emitted by the at least one light 2 to thereby visually highlight location of the actuator 1.

**Example 2:** the brake system 100 of example 1, wherein the controller 4, upon receiving from the at least one sensor 3 said signal S_{EB} indicating that the emergency braking 10 has been applied or is going to be applied to the motor vehicle 102, switches or causes switching the at least one light 2 from a first state to a second state visually indicative that emergency braking has been applied or is going to be applied to the motor vehicle.

**Example 3:** the brake system 100 of any of examples 1-2, wherein the controller 4, upon receiving from the at least one sensor 3 said signal S_{EB} indicating that the emergency braking 10 has been applied or is going to be applied to the motor vehicle 102, modifies or causes modifying the color of light emitted by the at least one light 2.

**Example 4:** the brake system 100 of any of examples 1-3, wherein the controller 4, upon receiving from the at least one sensor 3 said signal S_{EB} indicating that emergency braking 10 has been applied or is going to be applied to the motor vehicle 102, causes the at least one light 2 to emit flashing light.

**Example 5:** the brake system 100 of any of examples 1-4, wherein the controller 4, upon receiving from the at least one sensor 3 said signal S_{EB} indicating that emergency braking 10 has been applied or is going to be applied to the motor vehicle 102, modifies or causes modifying the brightness of light emitted by the at least one light 2.

**Example 6:** the brake system 100 of any of examples 1-5, wherein the controller 4, upon receiving from the at least one sensor 3 said signal S_{EB} indicating that emergency braking 10 has been applied or is going to be applied to the motor vehicle 102, causes the at least one light (2) to emit flashing light having a color different from a color of the light emitted when no emergency braking (10) has been applied or not going to be applied.

**Example 7:** the brake system 100 of any of examples1-6, wherein the at least one light 2 is a LED backlight.

**Example 8:** the brake system 100 of any of examples 1-7, wherein the at least one light 2 is located at or directly on the actuator 1.

**Example 9:** the brake system 100 of any of examples 1-8, wherein the at least one light 2 is located on a dashboard 105 of the motor vehicle 102.

**Example 10:** the brake system 100 of any of examples 1-9, wherein the actuator 1 comprises or is constituted by a pivoting actuation lever.

**Example 11:** the brake system 100 of example 10, wherein the pivoting actuating lever is configured to have a range of motion spanning from -45° to + 30°, preferably from -30° to +15° with respect to a rest position.

**Example 12:** the brake system 100 of any of examples 1-9, wherein the actuator 1 comprises or is constituted by a pushable button.

**Example 13:** a motor vehicle 102 comprising the brake system 100 of any of examples 1-12.

**Example 14:** the motor vehicle 102 of example 15, wherein the motor vehicle is a truck that comprises a tractor 103 and a trailer 104, and wherein the actuator 1, once actuated, causes applying braking to at least one of the tractor 103 and the trailer 104.

**Example 15:** a method 200 for aiding braking actions onboard a motor vehicle 102, comprising at least:
210: detecting, via at least one sensor 3, when an emergency braking 10 has been applied or is going to be applied to the motor vehicle 102;
220: upon detecting that emergency braking 10 has been applied or is going to be applied to the motor vehicle 102, modifying or causing modifying at least one visible characteristic of light emitted by at least one light 2 to thereby visually highlight location of an actuator 1 suitable for activating at least one further braking function of the motor vehicle.

**Example 16:** the method 200 of example 15, wherein said modifying or causing modifying 220 comprises switching or causing switching the at least one light 2 from a first state to a second state visually indicative that an emergency braking has been applied or is going to be applied to the motor vehicle.

**Example 17:** the method 200 of any of examples 15-16, wherein said modifying or causing modifying 220 comprises modifying or causing modifying color of light emitted by the at least one light 2.

**Example 18:** the method 200 of any of examples 15-17, wherein said modifying or causing modifying 220 comprises causing the at least one light 2 to emit flashing light.

**Example 19:** the method 200 of any of examples 15-18, wherein said modifying or causing modifying 220 comprises modifying or causing modifying the brightness of light emitted by the at least one light 2.

**Example 20:** the method 200 of any of examples 15-19, wherein said modifying or causing modifying 220 comprises, causing the at least one light 2 to emit flashing light having a color different from a color of light emitted when no emergency braking 10 has been applied or not going to be applied.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A brake system (100) for a motor vehicle (102), comprising at least:
- an actuator (1) for activating at least one braking function of the motor vehicle (102);
- at least one light (2) configured to emit light;
- at least one sensor (3) which detects when emergency braking (10) has been applied or is going to be applied to the motor vehicle (102); and
- a controller (4) which, upon receiving from the at least one sensor (3) a signal (S_{EB}) indicating that the emergency braking (10) has been applied or is going to be applied to the motor vehicle (102), modifies or causes modifying at least one visible characteristic of light emitted by the at least one light (2) to thereby visually highlight location of the actuator (1).

2. The brake system (100) of claim 1, wherein the controller (4), upon receiving from the at least one sensor (3) said signal (S_{EB}) indicating that the emergency braking (10) has been applied or is going to be applied to the motor vehicle (102), switches or causes switching the at least one light (2) from a first state to a second state visually indicative that emergency braking has been applied or is going to be applied to the motor vehicle.

3. The brake system (100) of any of claims 1-2, wherein the controller (4), upon receiving from the at least one sensor (3) said signal (S_{EB}) indicating that the emergency braking (10) has been applied or is going to be applied to the motor vehicle (102), modifies or causes modifying the color of light emitted by the at least one light (2).

4. The brake system (100) of any of claims 1-3, wherein the controller (4), upon receiving from the at least one sensor (3) said signal (S_{EB}) indicating that emergency braking (10) has been applied or is going to be applied to the motor vehicle (102), causes the at least one light (2) to emit flashing light.

5. The brake system (100) of any of claims 1-4, wherein the controller (4), upon receiving from the at least one sensor (3) said signal (S_{EB}) indicating that emergency braking (10) has been applied or is going to be applied to the motor vehicle (102), modifies or causes modifying the brightness of light emitted by the at least one light (2).

6. The brake system (100) of any of claims 1-5, wherein the controller (4), upon receiving from the at least one sensor (3) said signal (S_{EB}) indicating that emergency braking (10) has been applied or is going to be applied to the motor vehicle (102), causes the at least one light (2) to emit flashing light having a color different from a color of the light emitted when no emergency braking (10) has been applied or not going to be applied.

7. The brake system (100) of any of claims 1-6, wherein the at least one light (2) is located at or directly on the actuator (1) or on a dashboard (105) of the motor vehicle (102).

8. The brake system (100) of any of claims 1-7, wherein the actuator (1) comprises or is constituted by a pivoting actuation lever or by a pushable button.

9. The brake system (100) of claim 8, wherein the actuator (1) comprises or is constituted by a pivoting actuation lever configured to have a range of motion spanning from -45° to +30°, preferably from -30° to +15° with respect to a rest position.

10. Motor vehicle (102) comprising a brake system (100) of any of claims 1-9.

11. The motor vehicle (102) of claim 10, wherein the motor vehicle is a truck that comprises a tractor (103) and a trailer (104), and wherein the actuator (1), once actuated, causes applying braking to at least one of the tractor (103) and the trailer (104).

12. A method (200) for aiding braking actions onboard a motor vehicle (102), comprising at least:
(210): detecting, via at least one sensor (3), when an emergency braking (10) has been applied or is going to be applied to the motor vehicle (102);
(220): upon detecting that emergency braking (10) has been applied or is going to be applied to the motor vehicle (102), modifying or causing modifying at least one visible characteristic of light emitted by at least one light (2) to thereby visually highlight location of an actuator (1) suitable for activating at least one further braking function of the motor vehicle.

13. The method (200) of claim 12, wherein said modifying or causing modifying (220) comprises switching or causing switching the at least one light (2) from a first state to a second state visually indicative that an emergency braking has been applied or is going to be applied to the motor vehicle.

14. The method (200) of any of claims 12-13, wherein said modifying or causing modifying (220) comprises modifying or causing modifying color of light emitted by the at least one light (2).

15. The method (200) of any of claims 12-14, wherein said modifying or causing modifying (220) comprises at least one of:
- causing the at least one light (2) to emit flashing light;
- modifying or causing modifying the brightness of light emitted by the at least one light (2);
- causing the at least one light (2) to emit flashing light having a color different from a color of light emitted when no emergency braking (10) has been applied or not going to be applied.
